Europäisches Patentamt

European Patent Office

Office européen des brevets

Publication number: **0 285 118**
**A1**

# EUROPEAN PATENT APPLICATION

(21) Application number: 88105152.8

(22) Date of filing: 30.03.88

(51) Int. Cl.4 **G05B 15/02 , H05K 5/00**

(30) Priority: 31.03.87 JP 49107/87 U

(43) Date of publication of application:
**05.10.88 Bulletin 88/40**

(84) Designated Contracting States:
**AT BE CH DE ES FR GB GR IT LI LU NL SE**

(71) Applicant: **OMRON TATEISI ELECTRONICS CO.**
**10, Tsuchido-cho Hanazono Ukyo-ku**
**Kyoto 616(JP)**

(72) Inventor: **Shimonura, Tooru**
**4-50 Uryo Terado-cho**
**Muko-shi Kyoto-fu(JP)**
Inventor: **Naganawa, Kazutomo**
**2-1-410 Taruni-cho**
**Suita-shi Osaka-fu(JP)**
Inventor: **Tanamura, Toshiya**
**11-7, 1-chome Magami-cho**
**Takatsuki-shi Osaka-fu(JP)**

(74) Representative: **Kahler, Kurt**
**Patentanwalt Dipl.-Ing. Kurt Kahler**
**Gerberstrasse 3 Postfach 248**
**D-8948 Mindelheim(DE)**

(54) **Physical quantity controller.**

(57) A physical quantity controller is provided which includes a housing (1) having a plurality of openings (12a,13a,13b,12b) and a plurality of electrical contact patterns (6a,6b,6c) each of which is disposed opposite at least one of the openings. At least two of the contact patterns (6a,6b,6c) are short circuited by a short-circuiting pin inserted simultaneously through at least two of the openings. A CPU charges operation modes of the controller in response to the short-circuit states of the contacts.

FIG. I

EP 0 285 118 A1

## PHYSICAL QUANTITY CONTROLLER

Background of the Invention:

1. Field of the Invention:

This invention relates to a physical quantity controller which controls a physical quantity such as pneumatic pressure, temperature or speed, and more particularly, to a physical quantity controller wherein correct and easy changes of operation modes thereof can be effected.

2. Discussion of the Related Art:

For example, in a temperature controller operation modes such as test mode, calibration mode, and initial setting mode are employed. In a conventional controller, a mode changeover switch is employed to change the operation modes. The changeover switch is mounted on a circuit board housed in a case of the controller such that the switch cannot be easily accessed by users because the switch is rarely used.

Therefore, in such controllers, changing the operation modes is difficult and time-consuming because the circuit board must be taken out of the case. Moreover, users often manipulate the wrong switches because the mode changeover switch cannot be easily identified from among the other switches. In addition, users often touch circuit parts on the circuit board thus causing malfunctions of the controller. Furthermore, the expense of the controller is increased because the changeover switch is required even if it is rarely used.

Summary of the Invention:

It is, therefore, an object of this invention to provide a physical quantity controller which allows users to correctly and easily change operation modes.

It is another object of this invention to provide a physical quantity controller which is inexpensive.

According to this invention, there is provided a physical quantity controller which comprises (1) a case member including a plurality of openings, (2) a plurality of contacts each of which is disposed opposite one of the openings, and (3) control means for changing operation modes according to short-circuit states among the contact members.

Brief Description of the Drawings:

The above and other objects, advantages and features of the invention of the invention will be more fully understood when considered in conjunction with the following figures, in which like numerals designate like or corresponding components and of which:

Fig. 1 is a disassembled perspective view of a preferred embodiment according to the invention;

Fig. 2 is a partly sectional view of a molded front case of Fig. 1;

Fig. 3 is a block diagram of a physical quantity controller according to the invention;

Fig. 4 is a flow chart illustrating a schematic operation of the controller of Fig. 3;

Fig. 5A is a plan view of a short-circuiting pin according to the invention; and

Fig. 5B is a plan view of another short-circuiting pin according to the invention.

Detailed Description of the Invention

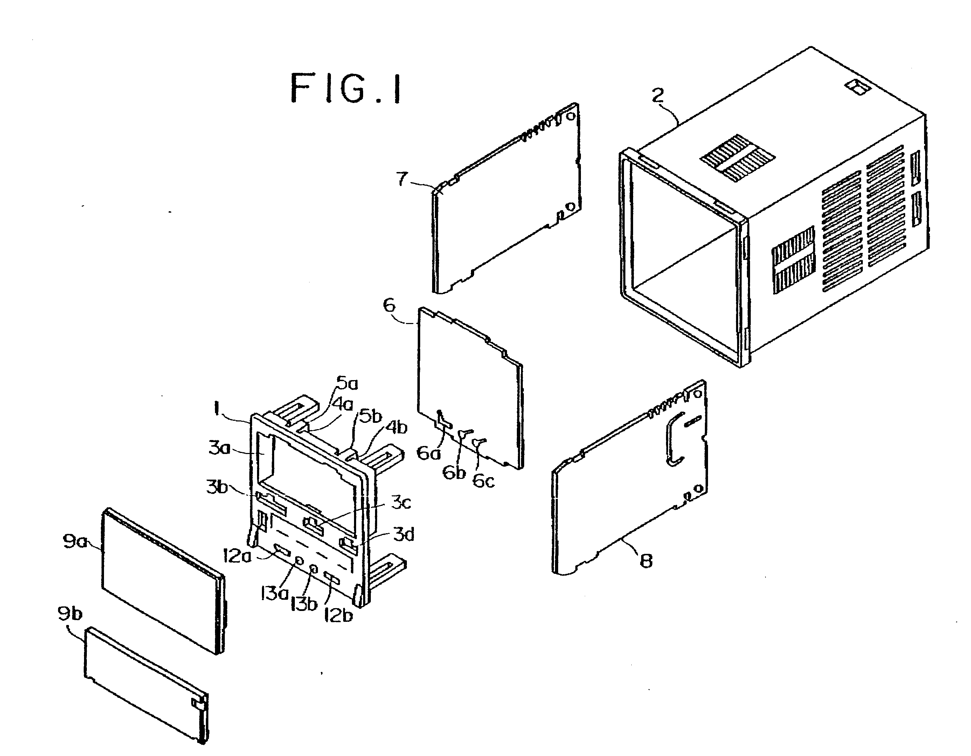

Fig. 1 shows a disassembled physical controller, which is a temperature controller, according to a preferred embodiment of this invention. The controller includes a front case 1 and a rear case 2. Front case 1 has a display window 3a, at its upper part and rectangular openings 3b, 3c and 3d below window 3a in which operation switches are to be installed. Behind window 3a, the front case 1 has upper protrusions 5a, 5b (identical lower protrusions are not shown in Fig. 1). Each of these protrusions has a locking portion such as 4a, 4b (identical locking portions on the lower protrusions are not shown in Fig. 1). These protrusions and their associated locking portions support a printed circuit board 6. Additional printed circuit boards 7 and 8 are also fixed to the front case 1 in contact with circuit board 6. Circuit boards 6, 7 and 8 are housed in the rear case 2. A transparent display cover 9a and a cover 9b are provided respectively to cover window 3a and an operation portion located below window 3a.

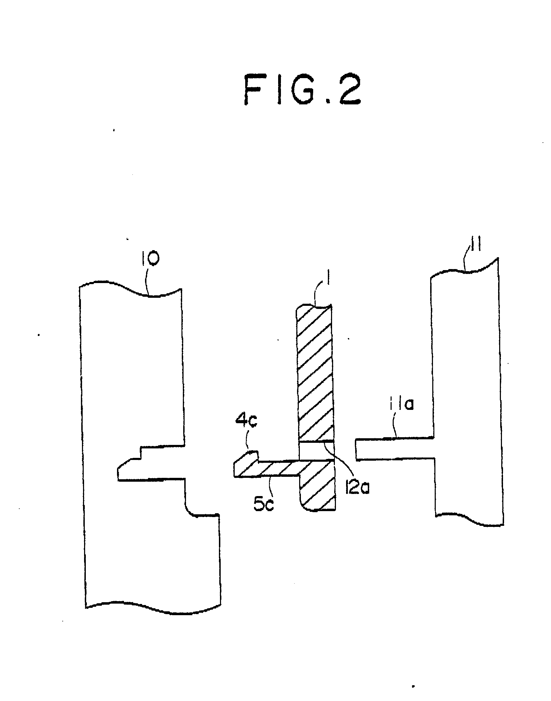

Fig. 2 shows a molding process for the front case 1. A pair of molds 10 and 11 are used to form the front case 1. Mold 11 includes four mold protrusions like element 11a, shown in Fig. 2 to form the aforesaid protrusions. These four mold protrusions also form the aforesaid locking portions. Fig. 2 shows lower protrusion 11a and locking portion 5c. In addition, the lower mold protrusions of mold 11 form openings 12a and 12b in the front case 1, respectively (shown in Fig. 1).

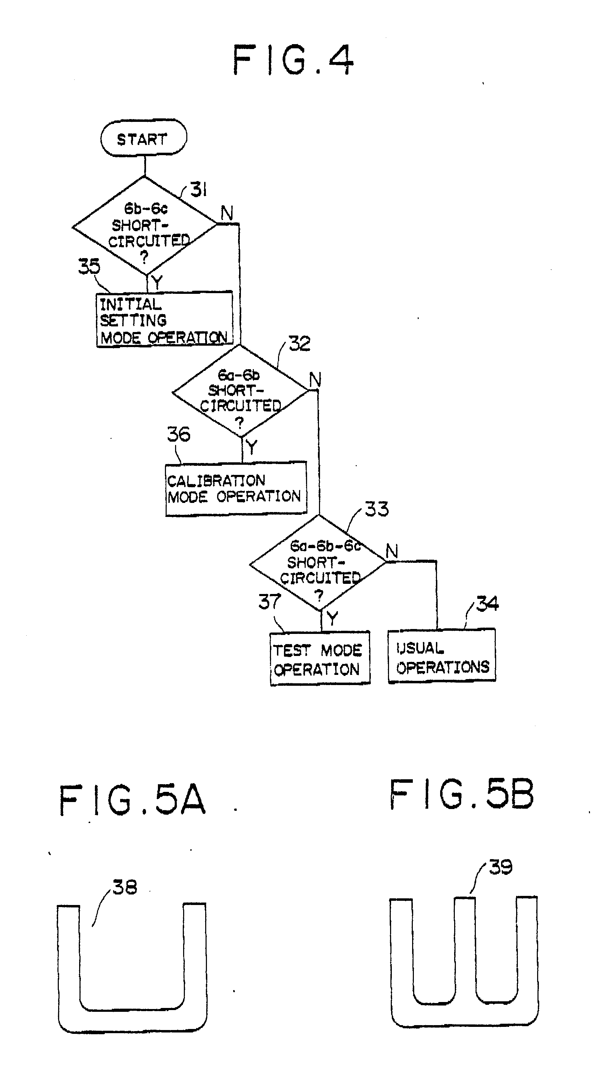

In this embodiment, as shown in Fig. 1, the front case 1 further has circular openings 13a and 13b between rectangular openings 12a and 12b. Contact patterns 6a, 6b and 6c are provided on circuit board 6, each of which is disposed opposite to the openings 12a, 13a and 13b as shown. Circular holes 13a and 13b are provided to allow users easy access to any desired one of the contact patterns 6a, 6b and 6c in a reliable manner. An U-shaped pin 38 (Fig. 5A), simultaneously inserted through two of the openings 12a, 13a, 13b and 12b, is used to short-circuit two of the three contact patterns 6a, 6b, and 6c. An E-shaped pin 39 (Fig. 5B), simultaneously inserted through three openings 12a, 13a, 13b and 12b, is used to short-circuit all of the three contact patterns 6a, 6b and 6c. Cover 9b is, of course, opened before the short-circuiting operation is carried out.

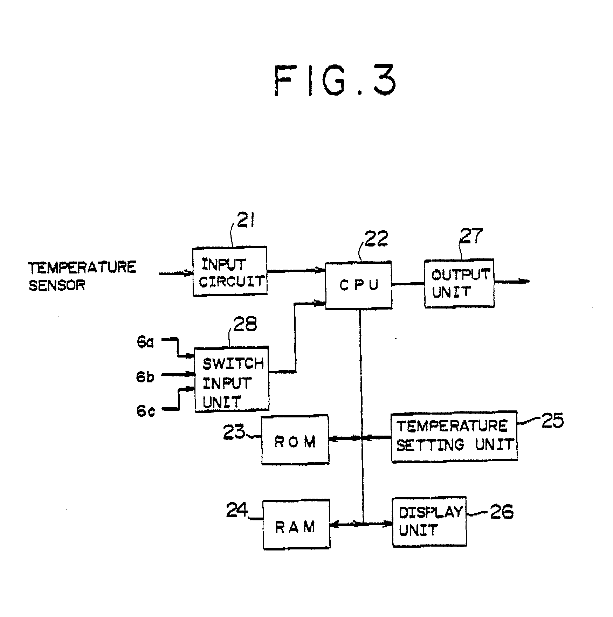

As shown in Fig. 3, the controller according to this invention includes an input circuit 21 which receives analog signals from a temperature sensor and converts them into digital signals. These digital signals are sent to a CPU 22 which is provided as a control means. A read only memory (ROM) 23, a random access memory (RAM) 24, a temperature setting unit 25, and a display unit 26 for displaying temperatures are dedicated to CPU 22. CPU 22 controls a process (not shown) via an output unit 27 so that the temperature associated with the process is controlled to reach a target value. A switch input unit 28 sends a signal to CPU 22 in accordance with the short-circuit states among contacts 6a-6c provided on the circuit board 6.

The operation of the temperature controller is described below referring to the flow chart of Fig. 4. When a power supply (not shown) is turned on, in step 31, CPU 22 receives a signal from switch input unit 28 and checks whether or not the two contacts 6b and 6c are short-circuited to each other. If they are not short-circuited, CPU 22 checks in step 32 whether or not contacts 6a and 6b are short-circuited. If the contacts 6a and 6b are not short-circuited, CPU 22 proceeds to step 33 and checks whether or not all of the three contacts 6a, 6b and 6c are short-circuited. If contacts 6a, 6b and 6c are not short-circuited, CPU 22 goes to step 34 to execute usual operations. In step 31, if CPU 22 finds that contacts 6b and 6c are short-circuited, CPU 22 goes to step 35 to execute the initial setting mode operation. In the initial setting mode operation, for example, switches are set to certain positions or constants are set. In step 32, if contacts 6a und 6b are short-circuited, CPU 22 proceeds to step 36, where the calibration mode operation is performed. In the calibration mode operation, input unit 21, for example, is calibrated. In step 33, if CPU 22 finds that all of the three contacts 6a, 6b and 6c are short-circuited, CPU 22 advances to step 37 to perform the test mode operation. In the test mode operation, some functions of the controller are tested. Although openings 12a, 12b, 13a, and 13b are provided on the front case 1, they can be formed alternatively on the rear cover or on any of the other walls of the housing.

The above description and the accompanying drawings are merely illustrative of the application of the principles of the present invention and are not limiting. Numerous other arrangements which employ the principles of the invention and which fall within its spirit and scope may be readily devised by those skilled in the art. Accordingly, the invention is not limited by the foregoing description, but only limited by the scope of the appended claims.

## Claims

1. A physical quantity controller, comprising:
- a case member (1) including a plurality of openings (12a, 13a, 13b);
- a plurality of contact members (6a,6b,6c), each of which is disposed opposite to at least one of said openings(12a, 13a, 13b); and
- control means (22) for changing operation modes of said controller in response to short-circuit states among said contact members (6a, 6b, 6c).

2. The controller as in Claim 1, further comprising a circuit board (6) on which said plurality of contact members (6a,6b,6c) are mounted.

3. A physical quantity controller, comprising:
- a case member (1) including a plurality of openings (12a,13a,13b,12b);
- a plurality of contact members(6a,6b,6c), each of which is disposed opposite to at least one of said openings;
- a short circuiting member (38;39) for simultaneous insertion through at least two of said openings (12a,13a,13b,12b) for short-circuiting at least two of said contact members (6a,6b,6c); and
- control means (22) for changing operation modes of said controller in response to short-circuit states among said contact members (6a,6b,6c).

4. The controller as in Claim 3, wherein said short-circuit member is an U-shaped pin (38).

5. The controller as in Claim 3, wherein said short-circuit member is an E-shaped pin (39) for simultaneous insertion through three of said openings (12a,13a,13b,12b).

FIG.1

# FIG.2

# FIG.3

TEMPERATURE SENSOR → INPUT CIRCUIT (21) → CPU (22) → OUTPUT UNIT (27) →

SWITCH INPUT UNIT (28), inputs 6a, 6b, 6c

ROM (23) ← TEMPERATURE SETTING UNIT (25)

RAM (24) ↔ DISPLAY UNIT (26)

# FIG.4

START

31 6b-6c SHORT-CIRCUITED ? — N

Y

35 INITIAL SETTING MODE OPERATION

32 6a-6b SHORT-CIRCUITED ? — N

Y

36 CALIBRATION MODE OPERATION

33 6a-6b-6c SHORT-CIRCUITED ? — N

Y

37 TEST MODE OPERATION

34 USUAL OPERATIONS

# FIG.5A

38

# FIG.5B

39

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 140 355 (COLT) <br> * Figure 10; page 7, lines 105-125 * | 1-3 | G 05 B 15/02 <br> H 05 K 5/00 |
| Y | | 4 | |
| Y | TECHNICAL DIGEST, no. 60, October 1980, page 25; A. WITTENBERG: "Pin shorting contact" <br> * Whole abstract * | 4 | |
| A | FEINWERKTECHNIK & MESSTECHNIK, vol. 91, no. 3, April-May 1983, pages 117-120; W. LESCHE: "Möglichkeiten der modularen Geräte-Elektronik mit Mikroprozessoren am Beispiel eines Kompaktreglers" <br> * Figure 3; page 118, chapter 3: "Eine neue Parametriertechnik" * | 1 | |
| A | DE-A-3 030 906 (SIEMENS) <br> * Page 6, lines 5-21 * | 1,4 | |
| A | CH-A- 609 526 (EBAUCHES) <br> * Whole document * | 1 | TECHNICAL FIELDS SEARCHED (Int. Cl.4) <br><br> G 05 B <br> H 01 H <br> H 05 K <br> H 01 R |

The present search report has been drawn up for all claims

| Place of search | Date of completion of the search | Examiner |
|---|---|---|
| THE HAGUE | 01-07-1988 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)